# FASCICULE DE BREVET EUROPEEN

(11) **EP 2 148 804 B1**
(45) Date de publication et mention de la délivrance du brevet: **29.02.2012**
(21) Numéro de dépôt: 08805699.9
(22) Date de dépôt: 23.04.2008
(51) Int. Cl.: B62D 25/00, B62D 29/00

(54) **Ensemble composé d'un élément de carrosserie de vehicule automobile dans lequel ets ménagé au moins un trou et d'un dispositif d'obturation dudit au moins un trou**
Einheit bestehend aus einem Kraftfahrzeug-Karosserieelement, in welchem wenigstens ein Loch gebildet ist, und einer Vorrichtung zum Verschliessen des wenigstens einen Lochs
Assembly composed of a motor vehicle bodyword component in which at least one hole is formed and a device for sealing the at least one hole

(30) Priorité: 31.05.2007 FR 0755372
(43) Date de publication de la demande: 03.02.2010
(73) Titulaire: Peugeot Citroën Automobiles SA, 78140 Vélizy-Villacoublay (FR)
(72) Inventeur: MUSEMENT, Eric, F-78990 Elancourt (FR)
(86) Numéro de dépôt international: PCT/FR2008/050745
(87) Numéro de publication internationale: WO 2008/152258

(56) Documents cités:
- EP-A- 0 733 558
- WO-A-2004/011320
- JP-A- 2006 008 018
- US-A- 5 829 482

## Description

La présente invention est relative à un ensemble comportant un élément et un dispositif d'obturation d'au moins un trou ménagé dans ledit élément.

A titre d'exemple, l'élément est un élément de carrosserie de véhicule automobile.

Dans de nombreux domaines d'application nécessitant l'assemblage de plusieurs éléments entre eux, il est nécessaire de réaliser entre ces éléments une étanchéité. C'est le cas par exemple des éléments de carrosserie des véhicules automobiles.

En effet, les éléments de carrosserie sont le plus souvent constitués par des tôles embouties qui doivent être assemblées ensemble. Les formes complexes des tôles embouties nécessitent de réaliser sur les bords de ces tôles, par exemple des trous ou des encoches, afin d'éviter la formation de plis au moment de l'emboutissage.

Lors de l'assemblage entre les différents éléments composant la carrosserie, une étanchéité doit être réalisée entre ces éléments. Généralement, l'étanchéité est réalisée en déposant au moment de ferrage ou au moment de la peinture un cordon d'étanchéité.

Mais, l'étanchéité des zones de raccordement entre les différentes tôles est difficile à réaliser avec un cordon d'étanchéité classique. Il en est de même des trous ou des découpes qui le plus souvent présentent des dimensions trop importantes qui ne peuvent donc être comblés par un tel cordon d'étanchéité.

Afin de réaliser de telles étanchéités, il est connu d'utiliser un matériau approprié qui, sous l'effet de la chaleur, notamment lors du passage de la carrosserie du véhicule en cataphorèse, se gonfle et remplit le trou ou la découpe où l'étanchéité doit être obtenue.

Il est connu de WO-2004/011320-A1 qui définit le préambule de la revendication 1 et de EP-0733558-A1 des dispositifs d'obturation d'un trou comportant un support comprenant un tel matériau ainsi qu'un moyen de fixation s'étendant à l'intérieur du trou à obstruer.

Mais, selon la forme du trou ou de la découpe à obturer, une pièce en matériau gonflant spécifique à chaque véhicule doit être réalisée entraînant, de ce fait, la fabrication d'outillages et de moules particuliers à chaque création ce qui augmente d'autant les coûts de production des véhicules automobiles.

L'invention a pour but de proposer un dispositif d'obturation qui permet par des moyens simples de remédier à ces inconvénients et de réduire les coûts.

L'invention a donc pour objet un ensemble composé d'un élément dans lequel est ménagé au moins un trou et d'un dispositif d'obturation dudit au moins un trou selon les caractéristiques de la revendication 1.

Les caractéristiques et avantages de l'invention apparaîtront au cours de la description qui va suivre, donnée à tire d'exemple et faite en référence aux dessins annexés, sur lesquels :
- la Fig. 1 est une vue schématique en perspective d'une partie d'un élément de carrosserie d'un véhicule automobile, destinée à recevoir un dispositif d'obturation, conforme à l'invention,
- la Fig. 2 est une vue schématique en perspective du dispositif d'obturation, conforme à l'invention,
- la Fig. 3 est une vue schématique en perspective d'un côté de l'élément de carrosserie équipé du dispositif d'obturation, conforme à l'invention, et
- la Fig. 4 est une vue schématique en perspective de l'autre côté de l'élément de carrosserie équipé du dispositif d'obturation, conforme à l'invention.

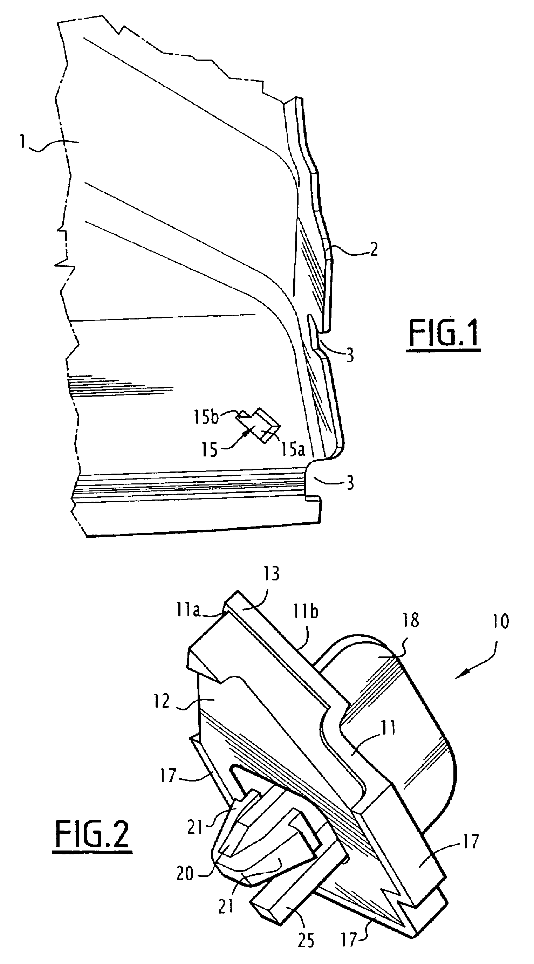

Sur la Fig. 1, on a représenté schématiquement une portion d'un élément 1, comme par exemple un élément d'une carrosserie d'un véhicule automobile. Cet élément 1 est constitué par une tôle obtenue par exemple par emboutissage et comprenant, dans cet exemple de réalisation, un rebord 2.

Le rebord 2 comporte au moins un trou 3 formé par exemple par une découpe ou une encoche qu'il est nécessaire de combler au moyen d'un dispositif d'obturation selon l'invention.

D'une manière générale, le dispositif selon l'invention est destiné à l'obturation de tous types de trous ménagés en bordure ou directement dans l'élément formé par un élément métallique ou en matière plastique.

Enfin, plusieurs dispositifs peuvent être utilisés pour obturer plusieurs trous dans un même élément et un dispositif peut être utilisé pour obturer un ou plusieurs trous.

En se reportant maintenant à la Fig. 2, on va décrire un dispositif d'obturation, conforme à l'invention.

Ce dispositif d'obturation comprend un support désigné dans son ensemble par la référence 10 comportant une plaque 11 munie sur sa face interne 11a destinée à être placée en vis à vis de l'élément 1, d'un matériau 12 gonflant à la chaleur. Ce matériau 12 gonflant à la chaleur est de type connu et est couramment utilisé dans le domaine de l'automobile pour réaliser l'étanchéité entre deux éléments de carrosserie.

Dans l'exemple de réalisation représenté sur les figures, la plaque 12 comporte une pointe 13 qui est destinée à déboucher dans le trou 3 à obturer pour que ledit matériau en gonflant remplisse ce trou 3, comme on le verra ultérieurement.

La face interne 11a de la plaque 12 comporte également des moyens 20 de fixation dans un orifice 15 (Fig. 1) ménagé dans l'élément 1.

Ainsi que montré à la Fig. 1, l'orifice 15 comporte une première partie 15a destinée à recevoir les moyens 20 de fixation.

Les moyens de fixation représentés à la Fig. 2 comprennent au moins une patte 20 s'étendant perpendiculairement à la patte 11 et comportant, à son extrémité libre, des languettes 21 d'encliquetage dans la première partie 15a de l'orifice 15. D'autres types de moyens d'encliquetage peuvent également être prévus.

Selon un mode de réalisation préféré, la face interne 11 a de la plaque 12 comporte également un organe d'indexage 25 dans une position déterminée de la plaque 11.

Dans ce cas, l'orifice 15 comporte une seconde partie 15b destinée à recevoir l'organe d'indexage 25.

L'organe d'indexage est formé par un doigt 25 s'étendant perpendiculairement à la plaque 11 et par exemple de section carrée.

Ce doigt 25 coopère lors du montage du support 10 avec la seconde partie 15b de l'orifice 15 qui présente une section complémentaire audit doigt 25 et, dans le cas présent, une section carrée.

Le support 10 comporte aussi des moyens de canalisation du matériau 12 lors de son gonflement vers le trou 3 qui sont formés par des rebords 17 ménagés sur au moins une partie du pourtour de la face 11a de la plaque 11.

Enfin, la plaque 11 comporte, sur sa face 11b opposée à celle portant le matériau 12, une patte 18 de préhension.

Pour obturer le trou 3, un opérateur procède de la façon suivante.

Tout d'abord, l'élément 1 est percé de l'orifice 15 et un support 10 est placé dans cet orifice 15.

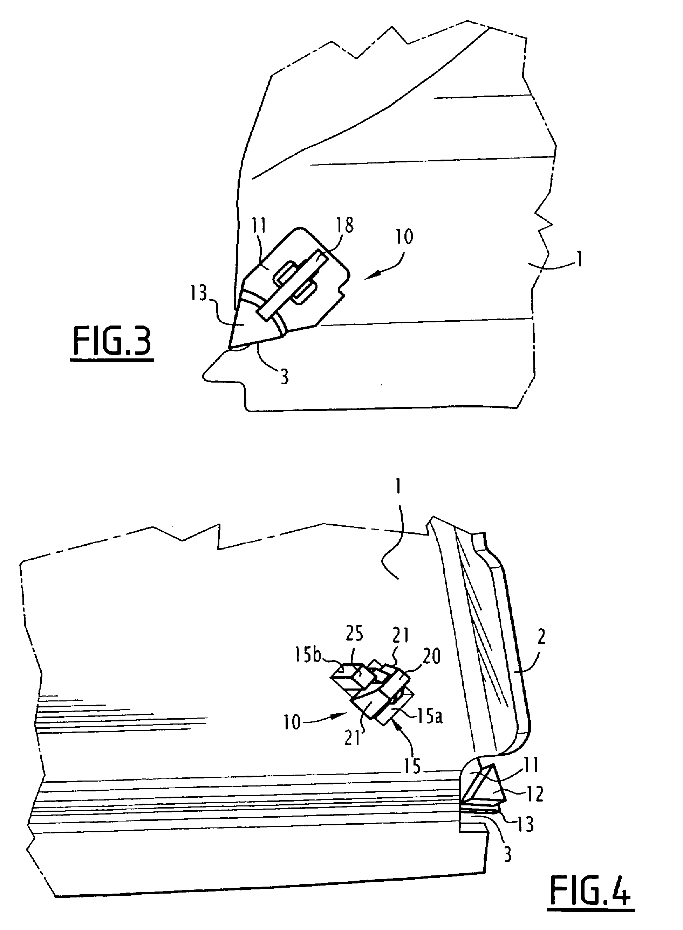

Pour cela, l'opérateur introduit la patte 20 dans la première partie 15a de l'orifice 15 de telle manière que les languettes d'encliquetage 21 soient placées de l'autre côté de l'élément 1. Simultanément, le doigt 25 est introduit dans la seconde partie 15b de l'orifice 15 ce qui oblige l'opérateur à placer le support 10 dans une position prédéterminée, ainsi que montrée sur les Figs. 3 et 4.

De ce fait, une portion 13 du support 10 portant le matériau 12 débouche dans le trou 3 à obturer, ainsi que représenté sur ces figures 3 et 4.

Lors du passage de la carrosserie du véhicule automobile en cataphorèse, le matériau 12 sous l'effet de la chaleur gonfle et remplit le trou 3 ménagé dans l'élément 1 ainsi que l'orifice 15. Au cours du gonflement du matériau 12, il est canalisé par les rebords 17 en direction du trou 3. Lorsque l'élément 1 est placé à proximité d'un autre élément de carrosserie, le matériau 12 en gonflant assure l'étanchéité entre ces deux éléments.

Le dispositif d'obturation selon l'invention peut facilement se monter sur un élément, comme par exemple un élément de carrosserie d'un véhicule automobile ou sur tout autre élément sur lequel une étanchéité doit être réalisée.

La plaque 11 du support 10 du dispositif d'obturation selon l'invention peut avoir tout autre forme appropriée en fonction du trou à obturer.

## Revendications

1. Ensemble composé d'un élément (1), dans lequel est ménagé au moins un trou (3), et d'un dispositif d'obturation dudit au moins un trou (3), l'élément (1) étant par exemple un élément de carrosserie de véhicule automobile, ledit dispositif d'obturation comprenant un support (10) monté sur l'élément (1) et portant, sur sa face en vis à vis de l'élément (1), un matériau (12) gonflant à la chaleur, au moins une portion du support (10) portant le matériau (12) débouchant dans le trou (3) pour que ledit matériau (12) en gonflant remplisse ledit au moins trou (3), **caractérisé en ce que** le support (10) est formé par une plaque (11) munie, sur sa face (11 a) portant le matériau (12), de moyens (20) de fixation dans un orifice (15) ménagé dans l'élément (1) à proximité dudit au moins trou (3).

2. Ensemble selon la revendication 1, **caractérisé en ce que** le support (10) est formé par une plaque (11) munie sur sa face (11a) portant le matériau (12), un organe (25) d'indexage dans une position déterminée de la plaque (11).

3. Ensemble selon la revendication 1 ou 2, **caractérisé en ce que** les moyens de fixation comprennent au moins une patte (20) s'étendant perpendiculairement à la plaque (11) et comportant, à son extrémité libre, des languettes (21) d'encliquetage dans ledit orifice (15).

4. Ensemble selon la revendication 2 ou 3, **caractérisé en ce que** l'organe d'indexage est formé par un doigt (25) s'étendant perpendiculairement à la plaque (11) et destiné à coopérer avec une partie (15b) dudit orifice (15) de section complémentaire.

5. Ensemble selon l'une quelconque des revendications précédentes, **caractérisé en ce que** le support (10) comporte des moyens (17) de canalisation du matériau (12) lors de son gonflement vers ledit au moins trou (3).

6. Ensemble selon la revendication 5, **caractérisé en ce que** les moyens de canalisation du matériau (12) sont formés par des rebords (17) ménagés sur au moins une partie du pourtour de la face (11 a) de la plaque (11) portant le matériau (12).

7. Ensemble selon l'une quelconque des revendications 2 à 6, **caractérisé en ce que** la plaque (11) du support (10) comporte, sur sa face (11 b) opposée à celle portant le matériau (12), une patte de préhension (18).

## Claims

1. An assembly composed of an element (1), in which at least one hole (3) is arranged, and of a device for sealing the at least one hole (3), the element (1) being for example a bodywork element of a motor vehicle, the said sealing device comprising a support (10) mounted on the element (1) and carrying, on its face opposite the element (1), a material (12) which swells when heated, with at least one portion of the support (10) carrying the material (12) opening out in the hole (3) so that the said material (12), when swelling, fills the at least one hole (3), **characterized in that** the support (10) is formed by a plate (11) provided, on its face (11a) carrying the material (12), with means (20) for fixing in an orifice (15) arranged in the element (1) close to the said at least one hole (3).

2. The assembly according to Claim 1, **characterized in that** the support (10) is formed by a plate (11) provided on its face (11a) carrying the material (12), an indexing member (25) in a defined position of the plate (11).

3. The assembly according to Claim 1 or 2 **characterized in that** the fixing means comprise at least one lug (20) extending perpendicularly to the plate (11) and comprising, at its free end, tabs (21) for snapping into the said orifice (15).

4. The assembly according to Claim 2 or 3, **characterized in that** the indexing member is formed by a finger (25) extending perpendicularly to the plate (11) and intended to cooperate with a part (15b) of the said orifice (15) of complementary section.

5. The assembly according to any one of the preceding claims, **characterized in that** the support (10) comprises means (17) for channelling the material (12) on its swelling towards the said at least one hole (3).

6. The assembly according to Claim 5, **characterized in that** the means for channelling the material (12) are formed by edges (17) arranged on at least a portion of the periphery of the face (11a) of the plate (11) carrying the material (12).

7. The assembly according to any one of Claims 2 to 6, **characterized in that** the plate (11) of the support (10) comprises, on its face (11b) opposite that carrying the material (12), a gripping lug (18).

## Patentansprüche

1. Einheit bestehend aus einem Element (1), in dem mindestens ein Loch (3) eingerichtet ist, und aus einer Vorrichtung zum Verschließen des mindestens einen Lochs (3), wobei das Element (1) zum Beispiel ein Kraftfahrzeug-Karosserieelement ist, wobei die Verschlussvorrichtung einen Träger (10) aufweist, der auf das Element (1) montiert ist und auf seiner Seite gegenüber dem Element (1) einen Werkstoff (12) trägt, der bei Hitze anschwillt, wobei mindestens ein Teil des Trägers (10), der den Werkstoff (12) trägt, in das Loch (3) mündet, damit der Werkstoff (12) beim Anschwellen die mindestens eine Öffnung (3) füllt, **dadurch gekennzeichnet, dass** der Träger (10) aus einer Platte (11) gebildet ist, die auf ihrer Seite (11a), die den Werkstoff (12) trägt, mit Mitteln (20) zum Befestigen in einer Öffnung (15), die in dem Element (1) in der Nähe des mindestens einen Lochs (3) eingerichtet ist, versehen ist.

2. Einheit nach Anspruch 1, **dadurch gekennzeichnet, dass** der Träger (10) aus einer Platte (11) gebildet ist, die auf ihrer Seite (11a), die den Werkstoff (12) trägt, mit einem Organ (25) zum Positionieren der Platte (11) in einer bestimmten Position versehen ist.

3. Einheit nach Anspruch 1 oder 2, **dadurch gekennzeichnet, dass** die Befestigungsmittel mindestens eine Pratze (20) aufweisen, die sich senkrecht zu der Platte (11) erstreckt und an ihrem freien Ende Laschen (21) zum Einrasten in die Öffnung (15) aufweist.

4. Einheit nach Anspruch 2 oder 3, **dadurch gekennzeichnet, dass** das Positionierorgan aus einem Finger (25) gebildet ist, der sich senkrecht zu der Platte (11) erstreckt und dazu bestimmt ist, mit einem Teil (15b) der Öffnung (15) mit komplementärem Querschnitt zusammenzuwirken.

5. Einheit nach einem der vorhergehenden Ansprüche, **dadurch gekennzeichnet, dass** der Träger (10) Mittel (17) zum Kanalisieren des Werkstoffs (12) bei seinem Aufschwellen zu dem mindestens einen Loch (3) aufweist.

6. Einheit nach Anspruch 5, **dadurch gekennzeichnet, dass** die Mittel zum Kanalisieren des Werkstoffs (12) aus Rändern (17) gebildet sind, die auf wenigstens einem Teil des Umfangs der Seite (11a) der Platte (11), die den Werkstoff (12) trägt, eingerichtet sind.

7. Einheit nach einem der Ansprüche 2 bis 6, **dadurch gekennzeichnet, dass** die Platte (11) des Trägers (10) auf ihrer Seite (11b), die der entgegengesetzt ist, die den Werkstoff (12) trägt, eine Greifpratze (18) aufweist.
